# EUROPEAN PATENT SPECIFICATION

(11) **EP 3 862 733 B1**
(45) Date of publication and mention of the grant of the patent: **24.04.2024**
(21) Application number: 20155588.5
(22) Date of filing: 05.02.2020
(51) Int. Cl.: G01J 5/08, G01J 5/20, G01J 5/00, G01J 5/0821, G01J 5/48

(54) **TEMPERATURE MEASUREMENT ASSEMBLY**
TEMPERATURMESSANORDNUNG
ENSEMBLE DE MESURE DE TEMPÉRATURE

(43) Date of publication of application: 11.08.2021
(73) Proprietor: Siemens Gamesa Renewable Energy A/S, 7330 Brande (DK)
(72) Inventor: GOLLNICK, Bert, 22145 Hamburg (DE)
(74) Representative: SGRE-Association

(56) References cited:
- EP-A1- 2 489 999
- CN-A- 103 234 977
- JP-A- H 116 770
- US-A1- 2017 268 376
- MIGUEL AZENHA ET AL: "Thermography as a technique for monitoring early age temperatures of hardening concrete", CONSTRUCTION AND BUILDING MATERIALS, ELSEVIER, NETHERLANDS, vol. 25, no. 11, 21 April 2011 (2011-04-21), pages 4232-4240, XP028234603, ISSN: 0950-0618, DOI: 10.1016/J.CONBUILDMAT.2011.04.065 [retrieved on 2011-04-28]

## Description

The invention describes a temperature measurement assembly and a method of determining a temperature of an object using such a temperature measurement assembly.

Various different types of system require temperature monitoring in order to assess the operating status of the system, to make control decisions, to detect faults, etc. For example it is known to monitor the temperatures in various parts of a wind turbine generator. A common type of temperature sensor is a resistance thermometer that uses a temperature/resistance relationship in order to generate a voltage output, with a wired or wireless connection to an evaluation unit. Devices using thermal imaging sensors are described in CN 103 234 977 and JP H11 6770.

However, it can be difficult to reliably measure or estimate the temperature in some kinds of system. For example it may be difficult to install temperature sensors at the critical locations in machines such as wind turbine generators, since the parts that become hot are also often the parts that are hard to reach, making it difficult and costly to access a failed temperature sensor. For these reasons, the use of resistance thermometer sensors can significantly add to the overall maintenance costs. Furthermore, a defective or failed sensor no longer delivers temperature readings, or may only deliver inaccurate readings. If such a sensor failure is not detected in good time, damage from overheating may result.

In a thermal energy storage system (TES), it is also necessary to monitor the interior temperature of an insulated container filled with a thermal storage material such as basalt rock. However, a resistance thermometer sensor installed in such a container may be essentially impossible to replace if it fails. The problem may be addressed by a high level of redundancy, thereby adding to the overall cost.

It is therefore an object of the invention to provide an improved way of monitoring temperature in such a system.

This object is achieved by the temperature measurement assembly of claim 1; and by the method of claim 12 of determining the temperature of an object using such a temperature measurement assembly.

According to the invention, the temperature measurement assembly comprises at least one temperature probe arranged in an object and comprising a thermally conductive lead extending between an inner probe end and an outer probe end, wherein the inner probe end is positioned in the interior of the object and the outer probe end is positioned at an exterior surface of the object; a thermographic camera positioned at a distance from the object and arranged to capture a number of infrared images of the outer probe end; and an image analysis module configured to determine a temperature of the object from analysis of the number of images.

As explained in the introduction, the aim of the invention is to simplify temperature monitoring in any system for which temperature measurements are relevant but the regions of interest are difficult to access. Examples of such systems are turbine generators, motors, thermal energy storage systems, power substations, power converters, reactors, etc. In the context of the invention, it shall be understood that the "object" whose temperature is being monitored is part of such a system. For example, the "object" may be the rotor or stator of a direct-drive generator; a rock-filled insulation container of an electric TES (ETES); or any apparatus or machine that includes a device or component that becomes hot during operation, and which has an interior that is difficult to access.

An advantage of the inventive temperature measurement assembly is that the temperature probe can be realised without any electronics or sensitive parts. In its simplest form, the temperature probe may comprise a wire or cable made of a thermally conductive metal such as copper, aluminium, etc., a metal alloy such as copper-tungsten, or any other suitable material such as diamond, aluminium nitride, an open-cell porous metal, etc. The inner end of the probe can be positioned at an area of interest within the object. The outer end of the probe can be "seen" by the thermographic camera, which can capture images at a suitable rate, for example at regular intervals. Another advantage of the inventive temperature measurement assembly is that there is essentially no restriction regarding the distance between the outer probe end and the imaging apparatus or thermographic camera, and this means that there is a favourable level of freedom as regards placement and positioning of the imaging apparatus.

According to the invention, the method of determining a temperature of an object using an embodiment of the inventive temperature measurement assembly comprises the steps of positioning the inner probe end of a temperature probe in the interior of the object and the outer probe end of that temperature probe at an exterior surface of the object; actuating the thermographic camera to capture images of an outer probe end; and determining a temperature of the object from analysis of the number of images.

Particularly advantageous embodiments and features of the invention are given by the dependent claims, as revealed in the following description. Features of different claim categories may be combined as appropriate to give further embodiments not described herein.

In the following, it may be assumed that the thermographic camera comprises one or more infrared sensors realised to capture an infrared image of the scene visible in the camera's field of view. It may be assumed that an infrared sensor is sensitive to wavelengths within the range of 1 um - 14 µm. Such infrared sensors are widely used in thermographic cameras and are favourably economical. Image processing techniques to deduce the temperature(s) recorded in a thermal image are also known, and the inventive method may avail of one or more off-the-shelf image processing algorithms.

The probe lead may extend into the object through a bore or cavity that is already a part of the object's structure, or through a bore or cavity provided specifically for the lead. The outer end of the probe may be arranged flush with an outer surface of the object, may extend beyond the outer surface, or may be arranged in a recess at a level beyond the outer surface of the object.

The thermally conductive lead may be made of a single wire or from stranded wire, for example made of copper or any other metal that is efficient at conducting heat. The outer end of the probe may simply comprise a flat end of the thermally conductive lead, i.e. with the same cross-section as the thermally conductive lead. However, even if a relatively thick wire is used, it may be challenging to image the outer end. Therefore, in a preferred embodiment of the invention, the cross-sectional area of the outer probe end exceeds the cross-sectional area of the thermally conductive lead by factor of at least 2:1, more preferably by at least 5:1. This can be done for example by manufacturing the lead to terminate in a disc at one end, which will be used as the outer end. Alternatively the thermally conductive lead could be welded or otherwise attached to a disc of thermally conductive metal. Instead of a disc-shaped outer end, the outer end can have any suitable form, for example its shape may be determined by requirements posed by the shape of the outer surface of the object.

Since the thermographic camera must be arranged to capture infrared images of the outer probe end, the outer probe end preferably lies on the optical axis of the image sensor, i.e. in the image sensor "line-of-sight". However this is not always practicable, particularly for structures with complex shapes and limited space. Therefore, in a preferred embodiment of the invention, the temperature measurement assembly comprises a light guide extending between an image sensor and the outer end of a temperature probe. A light guide may be realised using optical fibre, since this is able to transport infrared light. The advantage of using a light guide is that it can allow any placement of the probe outer ends relative to the thermographic camera. It can also provide a solution when it is not possible to arrange the thermographic camera in a line-of-sight to an outer probe end.

The inventive temperature measurement assembly can evaluate the recorded images in a number of ways. In a preferred embodiment of the invention, the image analysis module is configured to determine the temperature at the inner end of a temperature probe. This can be done by factoring in known parameters relating to the structure of the probe, for example the thermal conductivity of the probe lead, the length of the probe lead, the cross-sectional area of the probe lead, etc. To ensure an accurate temperature measurement using the inventive assembly, a calibration step may be included to identify any correction factor that should be applied to correct the temperature deduced from the thermal image evaluation.

The inventive temperature measurement assembly may utilize only a single temperature probe if this is enough to accurately monitor the object's interior temperature. In many cases, it may be necessary to measure the object's temperature in several locations. Therefore, in a further preferred embodiment of the invention, the temperature measurement assembly comprises a plurality of temperature probes arranged in the object. A single thermographic camera may be arranged to capture images of a plurality of probe outer ends. Alternatively or in addition, the temperature measurement assembly may comprise a plurality of thermographic cameras, each arranged to capture images of one or more probe outer ends.

In a preferred embodiment of the invention, the temperature measurement assembly is realised to obtain a favourably precise "image" of the temperature in the interior of the object. To this end, the temperature probe is preferably constructed so that the temperature at its outer end is as close as possible to the temperature at its inner end, i.e. the temperature in the interior of the object. To this end, the thermally conductive lead is preferably enclosed in a thermally insulating jacket made of one or more suitable materials such as a polymer, glass wool, cork, wood fibre, etc. With such an arrangement, the temperature measurement assembly can deduce the temperature in the interior of the object by analysing an image of a probe outer end.

Alternatively or in addition, it may be desired to obtain information regarding temperature differences between points of interest within the object. To this end, in a preferred embodiment of the invention, the image analysis module is configured to determine a relative temperature difference between temperatures observed at the outer ends of a plurality of probes whose inner ends are arranged at multiple points of interest within the object. A relative temperature difference can be informative since it allows the detection of temperature inhomogeneity or "hot spots" in the object, without having to know the precise temperatures at the probe inner ends.

With appropriate choice of thermally conductive (and thermally insulating) material for the probe lead, it is possible to obtain an accurate "reading" of the temperature inside the object, even if the lead is long. This allows considerable freedom in the overall assembly design. For example, multiple probes might be installed in one or more objects, and a single thermographic camera may be used to record images of the probe outer ends. In a preferred embodiment of the invention, the thermographic camera of such an assembly is mounted on a moveable support, and a controller is used to control the moveable support to align the optical axis of the thermographic camera with the outer end of a temperature probe, so that the camera can be aligned with each outer probe end in turn. Of course, such an embodiment can also be realised in combination with embodiment described above in which a light guide is used to allow the surface of the outer end to be "seen" by the image sensor, even if the probe outer end is not in the line-of-sight of the image sensor.

In a further preferred embodiment, the inventive temperature measurement assembly can be used in a system in which the object in which a temperature probe is arranged is not stationary relative to the thermographic camera. For example, a temperature probe may be installed in a rotating component of a generator such as a wind turbine generator, with the probe outer end at the surface of the rotating component. In such an embodiment, the outer probe end is "seen" once in each complete revolution of the rotating component. The thermographic camera could continually record what is seen in its field of view, and the results could be analysed to identify the relevant images (those containing the outer probe end). However, in a preferred embodiment of the invention, the temperature measurement assembly comprises a camera trigger means that actuates or triggers the thermographic camera so that it captures an image, or a sequence of images, only when the outer probe end is in the camera's field of view. The trigger means can be realised for example using a sensor such as a Hall-effect sensor. Equally, the thermographic camera may be mounted on a rotating component, while the temperature probe is installed in a stationary object. Other objects and features of the present invention will become apparent from the following detailed descriptions considered in conjunction with the accompanying drawings. It is to be understood, however, that the drawings are designed solely for the purposes of illustration and not as a definition of the limits of the invention.
Figures 1 - 4 show various embodiments of the inventive temperature measurement assembly;
Figure 5 shows a prior art temperature measurement arrangement.

In the diagrams, like numbers refer to like objects throughout. Objects in the diagrams are not necessarily drawn to scale.

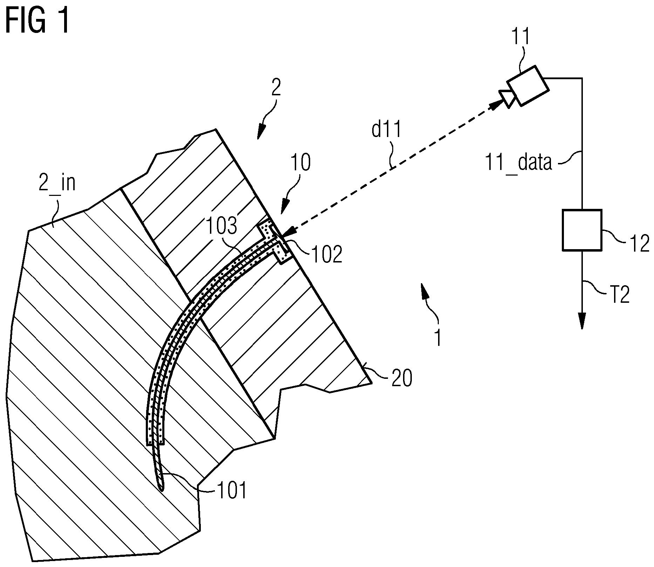

Fig 1 shows a first embodiment of the inventive temperature measurement assembly 1 for monitoring the temperature at the interior 2_in of an object 2, for example an ETES as described above. It may be assumed that it would be difficult to access the interior 2_in for placement of a temperature sensor. The diagram shows a temperature probe 10 arranged to extend into the interior 2_in. The probe 10 comprises a thermally conductive lead 100 extending between an inner probe end 101 and an outer probe end 102. The inner probe end 101 is positioned in the interior 2_in of the object 2 and the outer probe end 102 is positioned at an exterior surface 20 of the object 2. The conductive lead 100 is insulated by a jacket 103 made of a suitable material in order to minimize thermal measurement noise. In this way, the temperature at the interior 2_in can be accurately "mirrored" at the outer probe end 102. The diagram also shows a thermographic camera 11 positioned at a distance d11 from the object 2 so that it can capture a number of thermal images 11_data of the outer probe end 102. The assembly 1 may be realised to that the outer probe end 102 essentially fills the field of view of the camera 11. The diagram also indicates an image analysis module 12 that is configured to determine a temperature T2 of the object 2 by running the image data 11_data through suitable image processing algorithms, as will be known to the skilled person.

Such an embodiment of the inventive temperature measurement assembly 1 facilitates reliable temperature monitoring, and can be used for systems in which it is important to know the interior temperature, for example to schedule control sequences in the case of an ETES, and/or to avoid damage from overheating during operation in the case of a wind turbine generator, etc.

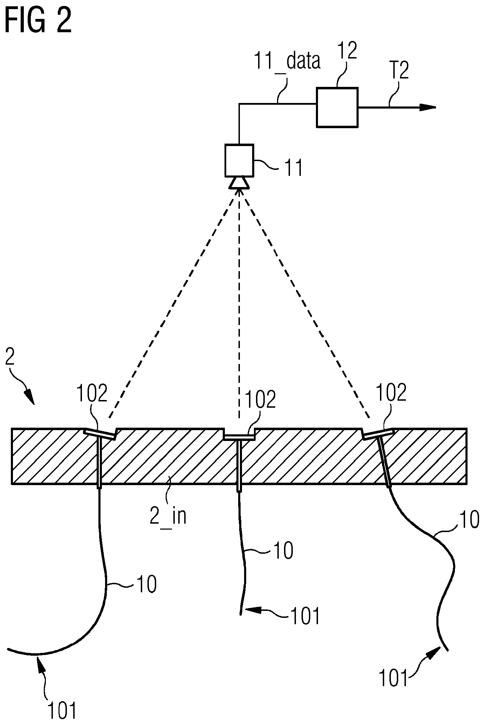

Fig 2 shows a further embodiment of the inventive temperature measurement assembly 1. Here, three probes 10 are installed in the object 2. Each inner probe end 101 can be placed at a specific point of interest. The outer probe ends 102 are arranged so that all three can be "seen" by the thermographic camera 11.

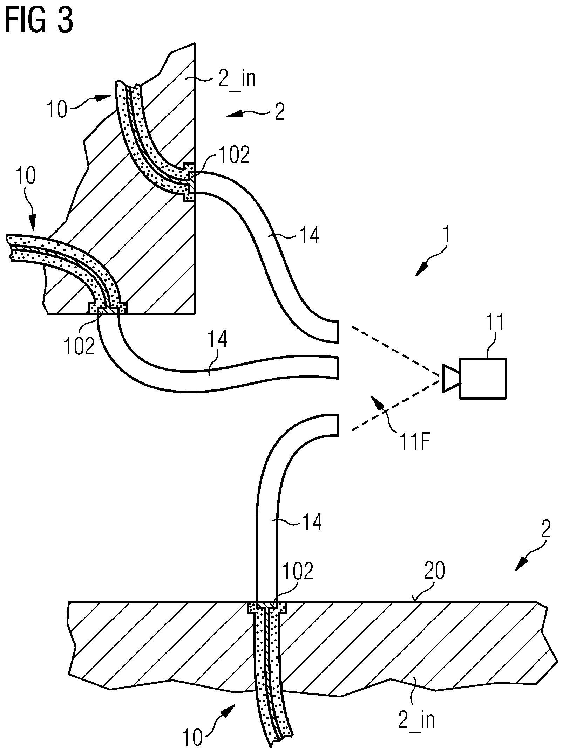

Fig 3 shows a further embodiment of the inventive temperature measurement assembly 1. Here, a number of probes 10 are installed in different objects 2. In this exemplary embodiment, the outer probe ends 102 cannot directly be "seen" by the thermographic camera 11. To enable the camera 11 to collect images of the outer probe ends 102, fibre-optic light guides 14 are arranged to optically bring the outer probe ends 102 into the camera's field of view 11F.

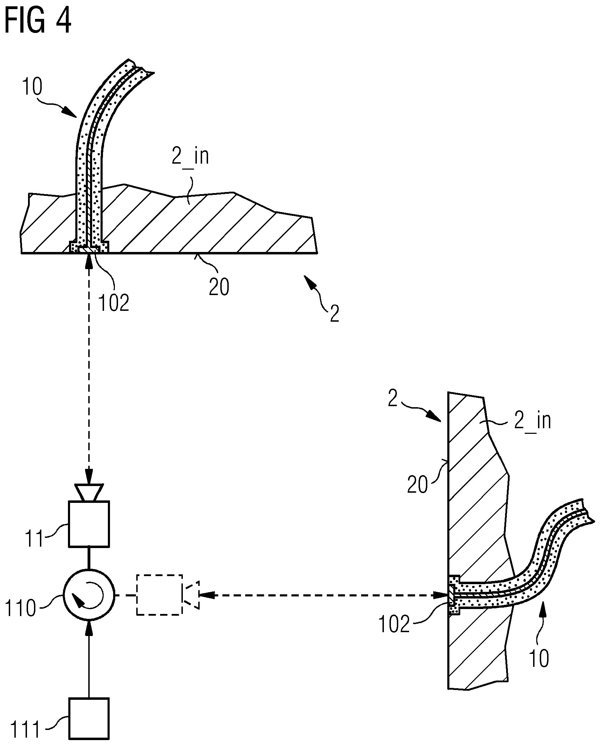

Fig 4 shows another embodiment of the inventive temperature measurement assembly 1. Again, a number of probes 10 are installed in different objects 2. In this exemplary embodiment, the outer probe end 102 of the probe 10 shown in the upper part of the diagram can be "seen" by the thermographic camera 11. To enable the camera 11 to also "see" the outer probe end 102 shown on the right-hand side of the diagram, the camera 11 is attached to a pivot-mount or swivel-mount 110, which can be controlled by a suitable controller 111. For example, the controller 111 can be configured to direct the camera 11 first towards one outer probe end 102 and then, after a certain time, to direct the camera 11 at the other outer probe end 102.

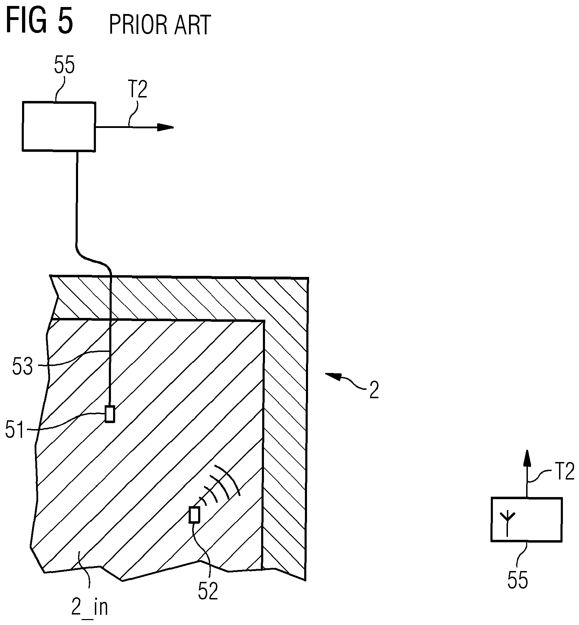

Fig 5 shows a prior art configuration for measuring temperature in the interior 2_in of an object 2. Here, a resistance thermometer 51, 52 is used to apply a known temperature/resistance relationship in order to generate an output signal. For example, a first resistance thermometer 51 generates a voltage output and has a wired connection 53 to an evaluation unit 55, which then converts the voltage to a temperature measurement T2. A second resistance thermometer 52 has a wireless connection to an evaluation unit 55, which then converts the received data to a temperature measurement T2. The problem with the prior art configuration is that a failed or defective temperature sensor is difficult to access, so that system control may be based on erroneous or absent temperature readings until the defective sensor can be replaced.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A temperature measurement assembly (1) comprising
- at least one temperature probe (10) arranged in an object (2) and comprising a thermally conductive lead (100) extending between an inner probe end (101) and an outer probe end (102), wherein the inner probe end (101) is positioned in the interior (2_in) of the object (2) and the outer probe end (102) is positioned at an exterior surface (20) of the object (2);
- a thermographic camera (11) positioned at a distance (d11) from the object (2) and arranged to capture a number of thermal images (11_data) of the outer probe end (102); and
- an image analysis module (12) configured to determine a temperature (T2) of the object (2) from analysis of the number of images (11_data).

2. A temperature measurement assembly according to claim 1, wherein the image analysis module (12) is configured to determine the temperature (T2) at the inner probe end (101) of a temperature probe (10) by factoring in known parameters relating to the structure of the temperature probe (10).

3. A temperature measurement assembly according to claim 1 or claim 2, wherein the cross-sectional area of the outer probe end (102) exceeds the cross-sectional area of the thermally conductive lead (100) by factor of at least 2:1.

4. A temperature measurement assembly according to any of the preceding claims, wherein the outer probe end (102) of a temperature probe (101) is arranged to lie in the field of view (11F) of the thermographic camera (11).

5. A temperature measurement assembly according to any of the preceding claims, comprising a light guide (14) extending between the thermographic camera (101) and the outer probe end (102) of a temperature probe (10).

6. A temperature measurement assembly according to any of the preceding claims, comprising a plurality of temperature probes (10) arranged in the object (2).

7. A temperature measurement assembly according to any of the preceding claims, wherein the image analysis module (12) is configured to determine a relative temperature difference between outer probe ends (102) of a plurality of temperature probes (10).

8. A temperature measurement assembly according to any of the preceding claims, wherein the thermally conductive lead (100) is realised for positioning inside any of a thermal energy storage system, a turbine generator, a power converter, a combustion engine, a reactor, an electricity substation.

9. A temperature measurement assembly according to any of the preceding claims, wherein the thermographic camera (11) is mounted on a moveable support (110), and wherein the temperature measurement assembly (1) further comprises a controller (111) for controlling the moveable support (110) to align the optical axis of the thermographic camera (11) with the outer probe end (102) of a temperature probe (10).

10. A temperature measurement assembly according to any of the preceding claims, wherein the thermally conductive lead (100) is enclosed in a thermally insulating jacket (103).

11. A temperature measurement assembly according to any of the preceding claims, configured for use in a system in which the object (2) exhibits motion relative to the thermographic camera (11), and comprising a camera trigger means to actuate the thermographic camera (11) when the outer probe end (102) enters its field of view.

12. A method of determining a temperature (T2) of an object (2) using a temperature measurement assembly (1) according to any of claims 1 to 11, which method comprises the steps of
- positioning the inner probe end (101) of a temperature probe (10) in the interior of the object (2), and positioning the outer probe end (102) of that temperature probe (10) at an exterior surface (20) of the object (2);
- actuating the thermographic camera (11) to capture images (11_data) of an outer probe end (102); and
- determining a temperature (T2) of the object (2) from analysis of the number of images (11_data).

## Patentansprüche

1. Temperaturmessanordnung (1), umfassend
- mindestens eine Temperatursonde (10), die in einem Objekt (2) angeordnet ist und eine wärmeleitfähige Leitung (100) umfasst, die sich zwischen einem inneren Sondenende (101) und einem äußeren Sondenende (102) erstreckt, wobei das innere Sondenende (101) im Inneren (2_in) des Objekts (2) positioniert ist und das äußere Sondenende (102) an einer Außenfläche (20) des Objekts (2) positioniert ist;
- eine Wärmebildkamera (11), die in einem Abstand (d11) von dem Objekt (2) positioniert und dazu angeordnet ist, eine Anzahl von Wärmebildern (11_data) des äußeren Sondenendes (102) zu erfassen; und
- ein Bildanalysemodul (12), das dazu ausgelegt ist, eine Temperatur (T2) des Objekts (2) aus einer Analyse der Anzahl von Bildern (11_data) zu bestimmen.

2. Temperaturmessanordnung nach Anspruch 1, wobei das Bildanalysemodul (12) dazu ausgelegt ist, die Temperatur (T2) an dem inneren Sondenende (101) einer Temperatursonde (10) durch Berücksichtigen bekannter Parameter in Bezug auf die Struktur der Temperatursonde (10) zu bestimmen.

3. Temperaturmessanordnung nach Anspruch 1 oder Anspruch 2, wobei die Querschnittsfläche des äußeren Sondenendes (102) die Querschnittsfläche der wärmeleitfähigen Leitung (100) um einen Faktor von mindestens 2:1 übersteigt.

4. Temperaturmessanordnung nach einem der vorhergehenden Ansprüche, wobei das äußere Sondenende (102) einer Temperatursonde (101) so angeordnet ist, dass es in dem Sichtfeld (11F) der Wärmebildkamera (11) liegt.

5. Temperaturmessanordnung nach einem der vorhergehenden Ansprüche, umfassend einen Lichtleiter (14), der sich zwischen der Wärmebildkamera (101) und dem äußeren Sondenende (102) einer Temperatursonde (10) erstreckt.

6. Temperaturmessanordnung nach einem der vorhergehenden Ansprüche, umfassend eine Mehrzahl von in dem Objekt (2) angeordneten Temperatursonden (10).

7. Temperaturmessanordnung nach einem der vorhergehenden Ansprüche, wobei das Bildanalysemodul (12) dazu ausgelegt ist, eine relative Temperaturdifferenz zwischen äußeren Sondenenden (102) einer Mehrzahl von Temperatursonden (10) zu bestimmen.

8. Temperaturmessanordnung nach einem der vorhergehenden Ansprüche, wobei die wärmeleitfähige Leitung (100) zum Positionieren innerhalb eines beliebigen eines Wärmeenergiespeichersystems, eines Turbinengenerators, eines Leistungswandlers, einer Brennkraftmaschine, eines Reaktors, eines Umspannwerks ausgeführt ist.

9. Temperaturmessanordnung nach einem der vorhergehenden Ansprüche, wobei die Wärmebildkamera (11) auf einem beweglichen Träger (110) montiert ist, und wobei die Temperaturmessanordnung (1) ferner eine Steuerung (111) zum Steuern des beweglichen Trägers (110) umfasst, um die optische Achse der Wärmebildkamera (11) mit dem äußeren Sondenende (102) einer Temperatursonde (10) auszurichten.

10. Temperaturmessanordnung nach einem der vorhergehenden Ansprüche, wobei die wärmeleitfähige Leitung (100) in einen wärmeisolierenden Mantel (103) eingeschlossen ist.

11. Temperaturmessanordnung nach einem der vorhergehenden Ansprüche, die zur Verwendung in einem System ausgelegt ist, in dem das Objekt (2) eine Bewegung relativ zu der Wärmebildkamera (11) aufweist, und umfassend ein Kameraauslösemittel zum Betätigen der Wärmebildkamera (11), wenn das äußere Sondenende (102) in ihr Sichtfeld eintritt.

12. Verfahren zum Bestimmen einer Temperatur (T2) eines Objekts (2) unter Verwendung einer Temperaturmessanordnung (1) nach einem der Ansprüche 1 bis 11, wobei das Verfahren die folgenden Schritte umfasst
- Positionieren des inneren Sondenendes (101) einer Temperatursonde (10) im Inneren des Objekts (2), und Positionieren des äußeren Sondenendes (102) dieser Temperatursonde (10) an einer Außenfläche (20) des Objekts (2);
- Betätigen der Wärmebildkamera (11), um Bilder (11_data) eines äußeren Sondenendes (102) zu erfassen; und
- Bestimmen einer Temperatur (T2) des Objekts (2) aus einer Analyse der Anzahl von Bildern (11_data).

## Revendications

1. Ensemble de mesure de température (1) comprenant :
- au moins une sonde de température (10) agencée dans un objet (2) et comprenant un fil thermiquement conducteur (100) qui est étendu entre une extrémité de sonde interne (101) et une extrémité de sonde externe (102), dans lequel l'extrémité de sonde interne (101) est positionnée dans l'intérieur (2_in) de l'objet (2) et l'extrémité de sonde externe (102) est positionnée au niveau d'une surface extérieure (20) de l'objet (2) ;
- une caméra thermographique (11) positionnée à une distance (d11) de l'objet (2) et agencée pour capturer un nombre d'images thermiques (11_data) de l'extrémité de sonde externe (102) ; et
- un module d'analyse d'images (12) configuré pour déterminer une température (T2) de l'objet (2) à partir de l'analyse du nombre d'images (11_data).

2. Ensemble de mesure de température selon la revendication 1, dans lequel le module d'analyse d'images (12) est configuré pour déterminer la température (T2) au niveau de l'extrémité de sonde interne (101) d'une sonde de température (10) en prenant en compte des paramètres connus se rapportant à la structure de la sonde de température (10).

3. Ensemble de mesure de température selon la revendication 1 ou la revendication 2, dans lequel l'aire en coupe transversale de l'extrémité de sonde externe (102) excède l'aire en coupe transversale du fil thermiquement conducteur (100) d'un facteur d'au moins 2:1.

4. Ensemble de mesure de température selon l'une quelconque des revendications précédentes, dans lequel l'extrémité de sonde externe (102) d'une sonde de température (101) est agencée de manière à être étendue dans le champ de vision (11F) de la caméra thermographique (11).

5. Ensemble de mesure de température selon l'une quelconque des revendications précédentes, comprenant un guide de lumière (14) qui est étendu entre la caméra thermographique (101) et l'extrémité de sonde externe (102) d'une sonde de température (10) .

6. Ensemble de mesure de température selon l'une quelconque des revendications précédentes, comprenant une pluralité de sondes de température (10) agencées dans l'objet (2).

7. Ensemble de mesure de température selon l'une quelconque des revendications précédentes, dans lequel le module d'analyse d'images (12) est configuré pour déterminer une différence de température relative entre des extrémités de sonde externes (102) d'une pluralité de sondes de température (10).

8. Ensemble de mesure de température selon l'une quelconque des revendications précédentes, dans lequel le fil thermiquement conducteur (100) est réalisé de sorte qu'il soit positionné à l'intérieur d'un quelconque moyen parmi un système de stockage d'énergie thermique, un générateur à turbine, un convertisseur de puissance, un moteur à combustion, un réacteur, une sous-station d'électricité.

9. Ensemble de mesure de température selon l'une quelconque des revendications précédentes, dans lequel la caméra thermographique (11) est montée sur un support mobile (110), et dans lequel l'ensemble de mesure de température (1) comprend en outre un contrôleur (111) pour commander le support mobile (110) pour aligner l'axe optique de la caméra thermographique (11) avec l'extrémité de sonde externe (102) d'une sonde de température (10).

10. Ensemble de mesure de température selon l'une quelconque des revendications précédentes, dans lequel le fil thermiquement conducteur (100) est enfermé dans une gaine thermiquement isolante (103).

11. Ensemble de mesure de température selon l'une quelconque des revendications précédentes, configuré pour une utilisation dans un système dans lequel l'objet (2) présente un déplacement par rapport à la caméra thermographique (11), et comprenant un moyen de déclencheur de caméra pour actionner la caméra thermographique (11) lorsque l'extrémité de sonde externe (102) entre dans son champ de vision.

12. Procédé de détermination d'une température (T2) d'un objet (2) en utilisant un ensemble de mesure de température (1) selon l'une quelconque des revendications 1 à 11, lequel procédé comprend les étapes de :
- positionnement de l'extrémité de sonde interne (101) d'une sonde de température (10) dans l'intérieur de l'objet (2), et positionnement de l'extrémité de sonde externe (102) de cette sonde de température (10) au niveau d'une surface extérieure (20) de l'objet (2) ;
- actionnement de la caméra thermographique (11) pour capturer des images (11_data) d'une extrémité de sonde externe (102) ; et
- détermination d'une température (T2) de l'objet (2) à partir de l'analyse du nombre d'images (11_data).
